# EUROPEAN PATENT APPLICATION

(11) **EP 1 413 482 A1**
(43) Date of publication of application: **28.04.2004**
(21) Application number: 03023888.5
(22) Date of filing: 21.10.2003
(51) Int. Cl.: B60Q 1/44, H01H 13/16

(54) **Device for signalling the operation of the brake or clutch of a vehicle**

(30) Priority: 25.10.2002 IT TO20020932
(71) Applicant: FIAT AUTO S.p.A., 10135 Torino (IT)
(72) Inventor: Donadio, Vincenzo, 10151 Torino (IT)
(74) Representative: Franzolin, Luigi

(57) **Abstract**

A device (4) for signalling the operation of the brake or clutch of a vehicle has electrical elements (5, 6) which are disposed on an extended surface (2a) of an operating element (1) for the brake or clutch, a pedal for example, and can be switched directly by an operator to emit an activation signal in response to a command action carried out by the operator on the operating element (1).

## Description

The present invention relates to a device for signalling the operation of the brake or clutch of a vehicle.

The use of an electromechanical device which signals the user's operation of the brake and clutch, for the purpose, respectively, of illuminating the stop lights and signalling the operation of the clutch to the engine control system, has been known for some time in the motor industry.

Generally, devices of these types consist of switches or push buttons, which are fitted on a special-purpose bracket formed, in the case of pedals, directly on the pedal system, and whose positions are adjusted at the time of assembly.

Although widely used, the known devices are subject to a number of drawbacks of a functional nature, due to errors of positioning at the time of assembly, particularly because of failure to comply with the specified tolerances, which are then inevitably added to the intrinsic design tolerances of the signalling devices themselves, and also due to the virtually inevitable loss of calibration or variation of relative position during the use of the vehicle. Furthermore, the operations of recalibrating the switches are particularly time-consuming and entail difficulties which, in the case of pedals, are particularly marked because of the difficulty encountered by the operator in accessing the compartment under the dashboard.

Since the signalling devices in use normally comprise mechanical parts which move relative to each other, in addition to a plurality of electrical contacts, these devices are also relatively noisy, as well as being relatively complicated in terms of construction.

The object of the present invention is to provide a device for signalling the operation of the brake or clutch of a vehicle, whose constructional characteristics enable the problems of the known art to be resolved in a simple and economical way.

According to the invention, a device for signalling the operation of the brake or clutch of a vehicle is provided, the device comprising electrical means which can be switched directly by an operator and which are positioned on an extended surface of an element for operating the brake or clutch, on which the operator acts directly when the vehicle is in use; the said electrical means being capable of emitting an activation signal in response to a command action carried out by the operator on the said operating element, and electrical connection means being provided for transferring the said activation signal.

Further characteristics of the present invention will be evident from the following description of an example of embodiment of the invention, provided without restrictive intent, with reference to the figures of the attached drawing, in which:
- Figure 1 is a cross section, with parts removed, through a preferred embodiment of the signalling device according to the present invention, fitted on a brake or clutch pedal of a vehicle; and
- Figure 2 is a general plan view of the device of Figure 1.

In the attached figures, the number 1 indicates a brake or clutch pedal of a vehicle, which comprises a foot pad 2 on which the user's foot rests, and a transmission bar 3 connected to the foot pad 2.

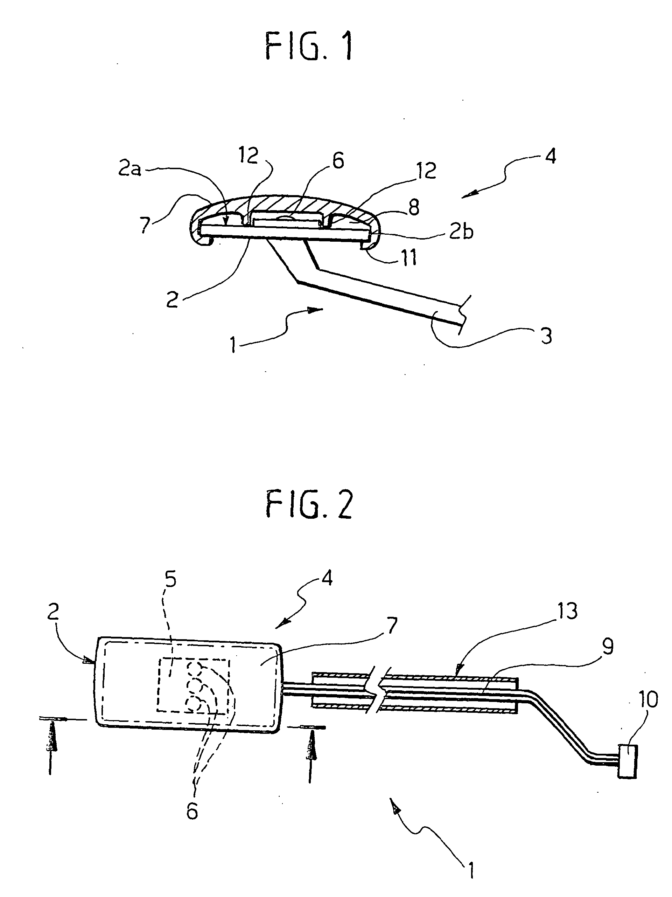

A device 4 for signalling the activation of the pedal 1 according to a preferred embodiment of the present invention is fitted on the foot pad 2. The device 4 comprises a supporting base 5 (shown in broken lines in figure 2), three push buttons 6 housed in the supporting base 5, and a cover 7 of rubber or other yielding or elastically deformable material positioned to cover the foot pad 2 to form, in conjunction with the said pad 2, a sealed chamber 8, which houses the supporting base 5, the push buttons 6, and an electrical connection 9 for electrically connecting the supporting base 5 to a connector 10 (as shown in Figure 2).

The supporting base 5 comprises a rigid printed circuit, and is fixed to one surface 2a of the foot pad 2 by releasable fixing means, such as snap-fitting elements and/or screws.

The push buttons 6 are of the "bubble" or "silicone mat" type and are fixed directly to the supporting base 5. In particular, the push buttons 6 must project from the upper surface 2a of the foot pad 2 only by a distance corresponding to the working travel for the response of the said push buttons 6. The purpose of this positioning constraint is to ensure that excessively hard pressure of the user's foot on the pedal will not damage either the push buttons 6 or the supporting base 5. Moreover, the presence of three push buttons 6 is justified by the need to occupy as much as possible of the transverse extension of the pedal foot pad, in order to ensure that the operation of the said pedal is detected even when the user's foot is not positioned in the centre of the foot pad 2.

The rubber cover 7, as shown in Figure 1, comprises an edge portion 11 which can engage and form a hermetic seal with an edge 2b of the foot pad 2, and two ribs 12, facing the surface 2a when in use and positioned on opposite sides of the push button 6 within the chamber 8. The function of the two ribs 12 is to space the cover 7 away from the push buttons 6, in such a way as to prevent even the slightest involuntary pressure on the said cover 7 from generating a response in the push buttons 6, and also to prevent any force being exerted on the push buttons 6 which might adversely affect the structure, and consequently the efficiency and reliability, of the push buttons 6.

The electrical connection 9 comprises a plurality of supply cables which, as shown in Figure 2, are made to pass through a casing 13 in which the transmission bars 3 of the pedals 1 are housed, and connect the supporting base 5 to the connector 10, which, when in use, will be connected to the vehicle wiring system.

As the above description makes clear, the device to which the present invention relates has the advantage of being independent of the travel of the pedals, thus avoiding the problems associated with the known solutions. In particular, the device 4 which is described makes it possible to overcome all the drawbacks arising from errors of positioning or tolerance, as well as those due to loss of calibration during the use of the vehicle.

Moreover, the device according to the invention is particularly noise-free, requires no special maintenance, is easy to install and is more durable than the prior art devices.

Finally, it is clear that the device for signalling the operation of the brake and clutch pedals as described can be modified and varied in ways which do not depart from the scope of the claims.

For example, as may be evident, the signalling device can be fitted on brake or clutch operating elements which are different from pedals, for example manual operating elements, such as those found on two-wheeled vehicles or in motor cars designed for disabled people, while retaining all the advantages described above.

## Claims

1. Device (4) for signalling the operation of the brake or clutch of a vehicle; the device comprising electrical means (5, 6) which can be switched directly by an operator and which are located on an extended surface (2a) of an operating element (1) for the brake or clutch, on which the operator acts directly when the vehicle is in use; the said electrical means (5, 6) being capable of emitting an activation signal in response to a command action carried out by the operator on the said operating element (1), and electrical connection means (9) being provided for transferring the said activation signal.

2. Device according to Claim 1, **characterized in that** the said switchable electrical means (5, 6) comprise a supporting base (5) positioned directly in contact with the said extended surface (2a) and at least one push button element (6) projecting beyond the said supporting base (5).

3. Device according to Claim 2, **characterized in that** the said supporting base (5) comprises a printed circuit.

4. Device according to Claim 3, **characterized in that** the said push button element (6) is connected integrally to the said supporting base (5).

5. Device according to any one of the preceding claims, **characterized in that** it comprises a sealed chamber (8) for housing the said switchable electrical means (5, 6).

6. Device according to Claim 5, **characterized in that** it comprises an elastically yielding body (7) which at least partially covers the said operating element (1); the said body (7) delimiting at least partially the said sealed chamber (7).

7. Device according to Claim 6, **characterized in that** it comprises stop means (12) for limiting the force exerted by the said user on the said switchable electrical means (5, 6).

8. Device according to Claim 7, **characterized in that** the said stop means (12) are carried by the said elastically yielding body (7) and can interact with the said operating element (1) by bearing on it.

9. Device according to Claim 7 or 8, **characterized in that** the said stop means (12) are housed in the said sealed chamber (8).

10. Device according to one of the preceding claims, **characterized in that** the said electrical connection means comprise wiring (9) housed within a partial cover (13) of the said operating element (1).
